(19) Europäisches Patentamt

European Patent Office

Office européen des brevets

(11) **EP 0 978 718 B1**

(12) **EUROPÄISCHE PATENTSCHRIFT**

(45) Veröffentlichungstag und Bekanntmachung des Hinweises auf die Patenterteilung:
**02.01.2002 Patentblatt 2002/01**

(51) Int Cl.$^7$: **G01N 21/53**, G01S 17/95

(21) Anmeldenummer: **99114813.1**

(22) Anmeldetag: **29.07.1999**

(54) **Verfahren zur Erfassung von Rauch mittels eines Lidar-Systems**

Method for detection of smoke by means of a LIDAR system

Procédé de détection de fumée au moyen d'un système à Lidar

(84) Benannte Vertragsstaaten:
**AT BE CH CY DE DK ES FI FR GB GR IE IT LI LU MC NL PT SE**

(30) Priorität: **07.08.1998 DE 19835797**

(43) Veröffentlichungstag der Anmeldung:
**09.02.2000 Patentblatt 2000/06**

(73) Patentinhaber: **Deutsches Zentrum für Luft- und Raumfahrt e.V.**
**53175 Bonn (DE)**

(72) Erfinder:
 • **Werner, Christian, Dr.**
 **81243 München (DE)**
 • **Streicher, Jürgen, Dr.**
 **82278 Althegnenberg (DE)**
 • **Klier, Michael**
 **82178 Puchheim (DE)**

(74) Vertreter: **von Kirschbaum, Albrecht, Dipl.-Ing.**
 **Patentanwalt Postfach 1520**
 **82102 Germering (DE)**

(56) Entgegenhaltungen:
 **EP-A- 0 635 731     US-A- 4 397 549**

 • **COLLIS R T H ET AL: "Mie scattering techniques for air pollution measurement with lasers" OPTO-ELECTRONICS, MAY 1972, UK, Bd. 4, Nr. 2, Seiten 87-99, XP002123707 ISSN: 0030-4077**
 • **ROY G ET AL: "Lidar-inversion technique based on total integrated backscatter calibrated curves" APPLIED OPTICS, 20 NOV. 1993, USA, Bd. 32, Nr. 33, Seiten 6754-6763, XP002123708 ISSN: 0003-6935**
 • **LOFSTROM P ET AL: "Concentration fluctuation model for decision-makers based on joint tracer and lidar measurements from a non-buoyant elevated plume" PROCEEDINGS OF THE 2ND INTERNATIONAL CONFERENCE ON AIR POLLUTION. PART 1 (OF 2);BARCELONA, SPAIN SEP 27-29 1994, Bd. 1, 1994, Seiten 571-579, XP002123709 Int Conf Air Pollut Proc;International Conference on Air Pollution - Proceedings 1994 Computational Mechanics Publ, Southampton, Engl**
 • **DYBDAHL A W: "Use of LIDAR for Emissions Source Opacity Determinations" NATL. ENFORCEMENT INVESTIG. CENT., DENVER, CO, USA,1981, XP002123710**

EP 0 978 718 B1

**Beschreibung**

Die Erfindung betrifft ein Verfahren zum Erfassen von Rauch mittels eines Lidar(Light Detection and Ranging)-Systems, bei dem die von einer Laser-Strahlungsquelle emittierten und von Partikeln und Molekülen der Atmosphäre rückgestreuten Laserimpulse bezüglich ihrer Intensität in Abhängigkeit von der Zeit, die seit der Emission des Laserimpulses vergangen ist, in einem Empfangsteleskop-Sensor registriert und detektiert werden.

Hierzu wird eine überwachende Lidarmessung innerhalb eines geschlossenen Raumes, beispielsweise in einer Halle oder in einem Tunnel, mittels einer den Raum insgesamt im wesentlichen durchziehenden und somit beispielsweise auch gefaltet verlaufenden Meßstrecke, wobei aus den im Empfangsteleskop-Sensor registrierten und aufgezeichneten Signalen gemäß der folgenden Gleichung eine vom natürlichen Aerosolgehalt des jeweiligen Raumes bestimmte Lidar-Signatur

$$S(R) = \frac{I(R)R^2}{K} = \beta(R) \cdot T^2(R) \text{ mit } K = I_0 \ \tau \ \eta \ A$$

(hierin sind: $I(R)$ = Empfangene Intensität aus der Entfernung R, R = Entfernung vom Lidar-System zum streuenden Partikel (Meßentfernung), $\beta(R)$ = Atmosphärischer Rückstreukoeffizient in der Entfernung R, $T(R)$ = Atmosphärische Transmission vom Lidar-System bis zur Entfernung R, $I_0$ = Intensität des emittierten Rechteck-Laserimpulses, $\tau$ = Impulslänge, $\eta$ = Wirkungsgrad des Sende- und Empfangssystems, und A = Effektive Fläche der Empfangsoptik) erhalten wird, die bei Auftreten von Rauch im Strahlengang eine oder mehrere Inhomogenitäten zeigt.

Eine derartige Methode ist beschrieben in "Mie scattering techniques for air pollution measurement with lasers", Collis R. T. H.; Uthe E.E., Opto-Electronics, May 1972, UK, Vol.4, Nr.2, pages 87-99. In "Lidar-inversion technique based on total integrated backscatter calibrated curves", Roy G., et al, Applied Optics, 20. Nov.1993, USA, Vol.32, Nr. 33, pages 6754 - 6763 sind mehrere Strahlteiler vorgesehen, um einen Laserstrahl in mehrere Strahlen auf gleicher Höhe aufzuteilen, so daß sich eine dreidimensionale Raumabtastung ergibt.

Mit bekannten Lidar-Systemen sind im Freien Fernmessungen von Luftverunreinigungen wie beispielsweise von Rauch über Entfernungen bis zu mehreren Kilometern von der Meßstation erreicht worden. Eine Verwendung von Lidar-Systemen zur Raucherfassung in geschlossenen Räumen wie beispielsweise in Hallen oder in Tunneln ist jedoch bisher nicht bekannt geworden.

Zur Raucherfassung und -meldung in geschlossenen Räumen ist der Einsatz von optischen Meldern, die nach dem Tyndalleffekt unter Verwendung von Lichtquelle und Photozelle arbeiten, und von Ionisationsmeldern bekannt und üblich, welche die Feststellung einer Rauchentwicklung und damit eines Brandausbruchs vor größerer Flammenbildung und Temperaturerhöhung im Raum ermöglichen. Allerdings bereitet damit die genaue Ortung und die genaue Erfassung der Verteilung der entstandenen Rauchwolke im Raum Schwierigkeiten.

Der Erfindung liegt vor allem die Aufgabe zugrunde, ein Verfahren für geschlossene größere Räume anzugeben, welches es ermöglicht, eine inhomogene Aerosolwolke aus Rauch genau zu orten und die Verteilung dieser Wolke mit einer hohen Auflösung von z.B. 50 cm zu erfassen.

Gemäß der Erfindung, die sich auf ein Verfahren der eingangs genannten Art bezieht, ist die Lösung dieser Aufgabe dadurch gekennzeichnet, daß zur Kontrolle mittels eines im Raum angeordneten Retroreflektors, auf den der Laserstrahl fokussiert ist und der eine zu überwachende Meßstrecke terminiert, durch eine Transmissionsmessung festgestellt wird, ob die Dämpfung der Laserstrahlung sehr stark ist, so daß auf eine extrem starke Rauchentwicklung im Verlauf der Meßstrecke geschlossen werden kann.

Gemäß einer vorteilhaften Weiterbildung des Verfahrens nach der Erfindung kann im Falle, daß nur eine kleine Inhomogenität in der Lidar-Signatur vorliegt, weil die emittierte Laserstrahlung durch die starke Rauchentwicklung verschluckt wird, diese kleine Inhomogenität in der Lidar-Signatur zur Identifizierung des Ortes der Rauchentwicklung herangezogen werden.

Um eine dreidimensionale Bestimmung der Aerosol-Verhältnisse im geschlossenen Raum zu erzielen, können in vorteilhafter Weise im zu überwachenden Raum zur Umlenkung des Laserstrahls des Lidarsystems im Verlaufe der Meßstrecke ein oder mehrere Spiegel (Scanspiegel) geschwenkt werden. Ferner können die Reflexe von den im Raum verwendeten Spiegeln in zweckmäßiger Weise korrigiert werden.

Das im geschlossenen Raum verwendete Lidar-System sollte aus Sicherheitsgründen augensicher sein.

Die Erfindung wird nachfolgend anhand der anliegenden Zeichnungen erläutert. Es zeigen:

Fig.1   untereinander für einen geschlossenen Raum das entfernungsabhängige Diagramm einer Aerosolwolke, ein Diagramm a mit dem entfernungsabhängigen Intensitäts-Meßergebnis bei einer hochaufgelösten Messung und ein Diagramm b mit dem entfernungsabhängigen Intensitäts-Meßergebnis bei einer Messung mit großer Impulslänge,

Fig.2    eine schematische Darstellung eines atmosphärischen Rückstreu-Lidar-Systems,

Fig. 3    unter a eine Laserimpulsform und darunter unter b eine Prinzipdarstellung des Laser-Radars,

Fig.4    das Schema eines ersten Versuchsaufbaus in einem geschlossenem Raum,

Fig.5    das Schema für eine Abtastung der Rauchwolke im Raum über einen Scanspiegel,

Fig.6    die schematisierten Signale einer Messung in einem Tunnel, und

Fig.7    ein Beispiel für eine Lidar-Signatur mit zwei Rauchereignissen im Verlauf der Meßstrecke.

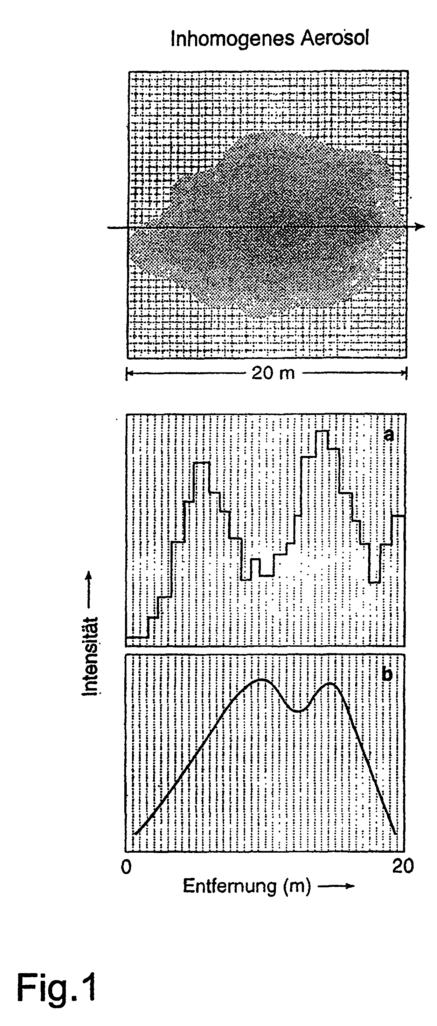

Anhand der Fig.1 wird am Beispiel eines Raumes von etwa 20 m Kantenlänge das der Erfindung zugrunde liegende Problem erläutert. Eine inhomogene Aerosolwolke befindet sich in einem Raum mit der Kantenlänge von etwa 20 m. Es soll die Verteilung der Wolke mit einer Auflösung von z.B. etwa 50 cm erfaßt werden. Die Fig.1 zeigt oben eine Modellverteilung in einer Schnittebene. Eine dreidimensionale Bestimmung der Aerosol-verhältnisse im Raum ist mit dem Verfahren nach der Erfindung möglich.

Der Begriff Lidar (Light Detection and Ranging) stellt das optische Synonym zum allgemein bekannten Radar dar und beschreibt lasergestützte Fernmeßverfahren, die zur qualitativen und quantitativen Erfassung von atmosphärenphysikalischen Parametern bzw. für die Bestimmung der räumlich strukturierten Verteilung gasförmiger Luftverunreinigungen eingesetzt werden können.

Lidar-Systeme verwenden im Gegensatz zu lasergestützten Langpfad-Absorptionsgeräten keine topographischen Ziele, um die emittierte Laserstrahlung registrieren zu können, sondern die Rückstreuung an winzigen Partikeln (Aerosole), die ständig in der Atmosphäre enthalten sind (Mie-Streuung) bzw. an den Molekülen der atmosphärischen Hauptkonstituenten selbst (Rayleigh-Streuung).

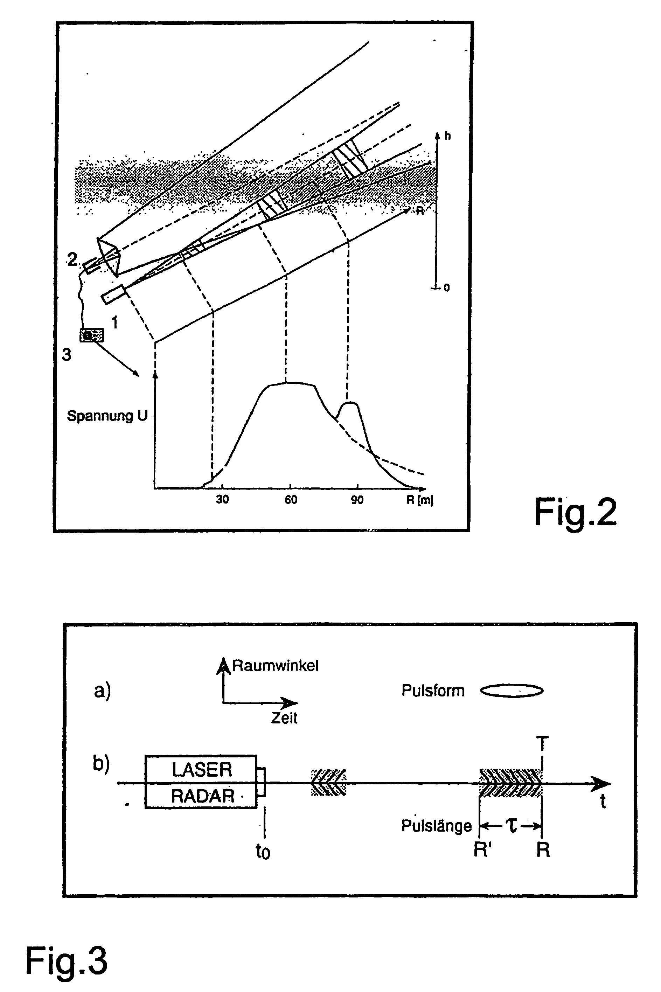

Die schematische Funktion eines Lidar-Systems ist in der Fig.2 dargestellt. Es besteht aus einem leistungsstarken Impulslaser 1 als Strahlungsquelle und einem benachbarten Empfangsteleskop 2 sowie aus einer Detektoreinrichtung 3, in welcher das in Fig.2 unten abgebildete entfernungsabhängige Intensitätsdiagramm (elektrische Spannung U in Abhängigkeit von der Entfernung R) erstellt wird. Mit R ist die Entfernung vom Lidar-System bezeichnet. Die Streuung der emittierten Laserimpulse an den Partikeln bzw. Molekülen geschieht entlang ihres gesamten Weges durch die Atmosphäre. Entsprechend der Entfernung R des streuenden Teilchens vom Lidar-System wird das Rückstreusignal einer Zeit t registriert, das durch folgende Gleichung definiert ist:

$$t = 2R/c \tag{1}$$

mit $c = 3 \cdot 10^8$ m/s (Lichtgeschwindigkeit).

Der Faktor 2 in der Gleichung (1) ist durch den doppelten Weg bedingt, den das emittierte Licht zurücklegt, bevor es wieder vom Lidar-System registriert wird. Die Entfernung R vom Lidar-System zu einem streuenden Partikel ist somit definiert als

$$R = 0{,}5 \cdot c \cdot t. \tag{2}$$

Es ist leicht nachvollziehbar, daß eine Entfernung von R = 150 m einer Zeit von t = 1 µs entspricht. Auf diese Weise lassen sich unbekannte Entfernungswerte anhand gemessener Zeitintervalle problemlos konvertieren.

Der Laserimpuls ist kein Deltaimpuls, sondern hat eine Form in Raum und Zeit. Fig.3 zeigt unter a das Schema nach einer mit einer Hochleistungszeitrafferkamera gemachten Aufnahme eines Wellenpakets. Der Laserimpuls behält diese Form während seines Weges durch die Atmosphäre bei, wenn er nicht durch Inhomogenitäten des atmosphärischen Brechungsindex aufgeweitet wird. Das von den Aerosolen und Molekülen im beleuchteten Volumen zurückgestreute Licht gelangt auf gleichem Weg zurück zum Empfangsteleskop. Die Fig.3 zeigt unter b die Zeitskala.

Die Entfernung R-R' = cτ/2 wird als die "effektive Impulslänge" bezeichnet. Sie ist genau halb so lang wie die ursprünglich beleuchtete Impulsvolumenausdehnung. Für Festziele wie feste Oberflächen und Gebäude am Ort $R_T$ (korrespondierend zur Zeit T) erhält man den ersten Anteil an reflektierter Strahlung bei $R(T) = c(T-t_0)/2$ und den letzten Anteil bei $R(T+\tau) = c(T-t_0-\tau)/2$. Die Impulslänge τ/2 ist auch hier ein Maß für die Entfernungsauflösung ($R(T)-R(T+\tau) = c\tau/2$).

Nach dem Aussenden des Laserimpulses vom Impulslaser 1 wird das zeitlich versetzte und aufgefächerte Rückstreusignal vom Empfangsteleskop 2 des Lidar-Systems registriert und dem optischen Detektor 3 zugeführt, wo es in ein elektrisches Signal umgeformt wird Fig.2). Dieses Signal wird mit hoher zeitlicher Auflösung digitalisiert und im Rechner des Lidar-Systems gespeichert. Auf diese Weise sind die Empfangsdaten als entfernungsmäßig aufgelöste Datensätze verfügbar und können mit mathematischen Algorithmen ausgewertet werden.

Die Strukturen dieser Algorithmen orientieren sich dabei an der jeweils zugrunde liegenden Wechselwirkung und an dem angewandten Lidar-Verfahren. In den folgenden Abschnitten werden unterschiedliche Verfahren vorgestellt, die sich bereits in der Vergangenheit bei der Analyse und Quantifizierung von atmosphärischen Parametern und dem Nachweis von Spurengasen bewährt haben. Das Rückstreu-Lidar, mit dem die mikroskopische Struktur der Streupartikel untersucht werden kann und das für die Analyse des atmosphärischen Dichte- und Temperaturprofils eingesetzt werden kann, stellt hierbei die einfachste Form eines Lidar-Systems dar, so daß wesentliche apparative Grundlagen am Beispiel dieser Version vorgestellt werden können.

Das Prinzip des Rückstreu-Lidars stellt die Grundlage aller Lidar-Systeme dar und kann in vielfältiger Weise für die Charakterisierung atmosphärenphysikalischer bzw. meteorologischer Parameter eingesetzt werden. Mit einer derartigen Anlage, die im einfachsten Fall mit einer einzelnen fest eingestellten Wellenlänge operiert, können bereits Dichte- und Temperaturprofile der Atmosphäre ermittelt werden:

- Vertikales Dichteprofil
- Vertikales Temperaturprofil
- Ausdehnung der planetaren Grenzschicht
- Charakterisierung der Bewölkungsstatistik
- Analyse des Partikelspektrums in Wolken.

Der Sendelaser des Rückstreu-Lidars emittiert seine Strahlung (Impulse) in die Atmosphäre, wo sie durch Aerosole bzw. die Moleküle der atmosphärischen Hauptkonstituenten zum Empfangsteleskop des Lidar-Systems zurückgestreut und dort detektiert werden. Nach einem Zeitintervall, das durch die Laufzeit des zurückgestreuten Signals gegeben ist, wird diese Intensität im Empfangsteleskop des Lidar-Systems registriert. Dieser Zusammenhang wird durch die folgende Gleichung dokumentiert:

$$I(R) = I_0 \cdot \tau \cdot \eta \frac{A}{R^2} \beta(R) \cdot T^2(R) \tag{3}$$

mit

I(R) = Empfangene Intensität aus der Entfernung R,
$I_0$ = Intensität des emittierten Rechteckimpulses,
$\tau$ = Impulslänge,
$\eta$ = Wirkungsgrad des Sende- und Empfangssystems,
A = Effektive Fläche der Empfangsoptik,
R = Entfernung vom Lidar-System zum streuenden Partikel (Meßentfernung),
$\beta(R)$ = Atmosphärischer Rückstreukoeffizient in der Entfernung R, und
T(R) = Atmosphärische Transmission vom Lidar-System bis zur Entfernung R.

Der zeitliche Verlauf dieses Signals ist durch den entfernungsmäßigen Verlauf des Rückstreukoeffizienten $\beta$(R) und der atmosphärischen Transmission T(R) bestimmt. Die übliche Entfernungsauflösung ist mit $C\tau/2$ mit $\tau$ als der Impulslänge gegeben. "Normale" bekannte Lidar-Systeme für die Atmosphärenforschung haben eine Auflösung von 3 m mit einer Laser-Impulsdauer von umgerechnet 20 ns. Für Festziele lassen sich damit auch höhere Auflösungen aufgrund einer Schwelle und der zeitlichen Zuordnung (Start-Stop-Methode) erzielen.

Rein rechnerisch bietet sich für das angegebene Ziel ein sogenanntes Kurzpuls-Lidar mit einer Impulsdauer von 3 ns und einer Speicher- bzw. Digitalisierungsrate von 300 MHz an. Ein solches bekanntes System hat etwa die Größe eines Fernglases. Das Signal hätte die Gestalt der Kurve a in Fig.1 für eine Einzelmessung. Für eine dreidimensionale Darstellung müßte eine Abtastung hinzukommen. Die Digitalisierung von zweidimensionalen Schnitten mit Hilfe von CCD-Arrays ist möglich.

Beim sogenannten Langpuls-Lidar , das bekannt ist, wird ein Impuls der Zeitdauer von etwa 20 ns ausgesendet. Das ermittelte Empfangssignal hat die Gestalt der Kurve b in der Fig.1. Die Auflösung ist mit 3 m noch nicht dem Problem angepaßt. Eine mathematische Entfaltung ist möglich, um auf eine Signalform entsprechend der Kurve a in der Fig.1 zu kommen. Die erforderlichen Änderungen an solch einem bekannten Lidar-System betreffen die Digitalisierung und die Signalentfaltung.

Setzt man hierbei

$$R := R(t) := ct/2,$$

$$\tilde{I}(t) = I\big(R(t)\big),$$

$$\tilde{\beta}(t) = \beta\big(R(t)\big),$$

und

$$\tilde{T}(t) = T\big(R(t)\big),$$

so erhält man aus der Gleichung (3) die folgende Gleichung (4):

$$\tilde{I}(t) = I_0 \cdot \tau \cdot \eta \frac{A}{R(t)^2} \tilde{\beta}(t) \cdot \tilde{T}^2(t). \qquad (4)$$

Setzt man weiterhin

$$g(t) := \eta \frac{A}{R(t)^2} \tilde{\beta}(t) \cdot \tilde{T}^2(t)$$

und

$$h(t) := I_0 1_{[0,\tau]}(t) := \begin{cases} I_0 & \text{für } 0 \le t \le t \\ 0 & \text{sonst} \end{cases},$$

0 sonst
so erhält man aus Gleichung (4) die folgende Gleichung (5):

$$\tilde{I}(t) = \int_{\mathbb{R}} h(s)\,ds \cdot g(t). \qquad (5)$$

Damit ist die klassische Lidar-Gleichung (3) für den Rechteckimpuls eine "Vergrößerung" der folgenden klassischen Lidar-Gleichung (6) für den modulierten Impuls:

$$\tilde{I}_m(t) = \int_{\mathbb{R}} h_m(s) \cdot g(t - s)\,ds, \qquad (6)$$

wobei $g(t)$ wie vorstehend definiert ist und $h_m(t)$ die Modulation des emittierten Lidarimpulses, also den zeitlichen Verlauf der Intensität des emittierten Impulses beschreibt. Damit ist beim Langpuls-Lidar die empfangene Intensität das Faltungsprodukt von $h_m$ und $g$, d.h.:

$$\tilde{I}_m h_m * g .\qquad\qquad\qquad (7)$$

Bezeichnet $\hat{f}$ die Fourier-Transformierte der Funktion f, d.h.

$$\hat{f}(y)_. = \int_R f(x)e^{ixy}dx,$$

so folgt aus der Produktregel für Fourier-Transformierte einer Faltung aus der Gleichung (7):

$$\hat{I}_m = \hat{h}_m \cdot g.\qquad\qquad\qquad (8)$$

Unter den üblichen Voraussetzungen kann man damit aus der Gleichung (7) bei Kenntnis der Modulation $h_m$ mit Hilfe der Fourier-Transformation und der Fourier-Rücktransformation die Funktion g und damit die gesuchte Funktion $g_t T_t$ berechnen. Liegt das empfangene und gemäß Gleichung (6) dargestellte Lidar-Rückstreusignal zeitlich genügend hoch aufgelöst vor, so wird bei einer entsprechenden Diskretisierung auch die diskrete Fourier-Transformation zu einer ausreichend genauen Bestimmung der gesuchten Funktion führen. Bei bekanntem Laserimpulsprofil kann auch dieses statt des Rechteckimpulses benutzt werden. Die Auflösung sollte in der Größenordnung der geforderten Meßauflösung liegen.

Mittels mechanischer Anordnungen, z.B. Spiegel, oder optischer Anordnungen, z.B. zwei Keile, läßt sich eine dreidimensionale Abtastung gewährleisten. Beim Kurzpuls-Lidar kann eine CCD-Registeranordnung die Signale direkt der Meßrichtung zuordnen. Das Auslesen des Registers gibt direkt das dreidimensionale Dichteprofil der Inhomogenität. Beim Langpuls-Lidar und dem modulierten Lidar muß das digitalisierte Signal umgerechnet und per Rechner ein dreidimensionales Bild erstellt werden.

Für den gemäß der Erfindung vorgesehenen Einsatz des Verfahrens zur Rauchmeldung läßt sich ein Gerät aus den Komponenten Laser, Datenauswertung, Scanner, Digitalisierung, Empfänger und Darstellung zusammenstellen.

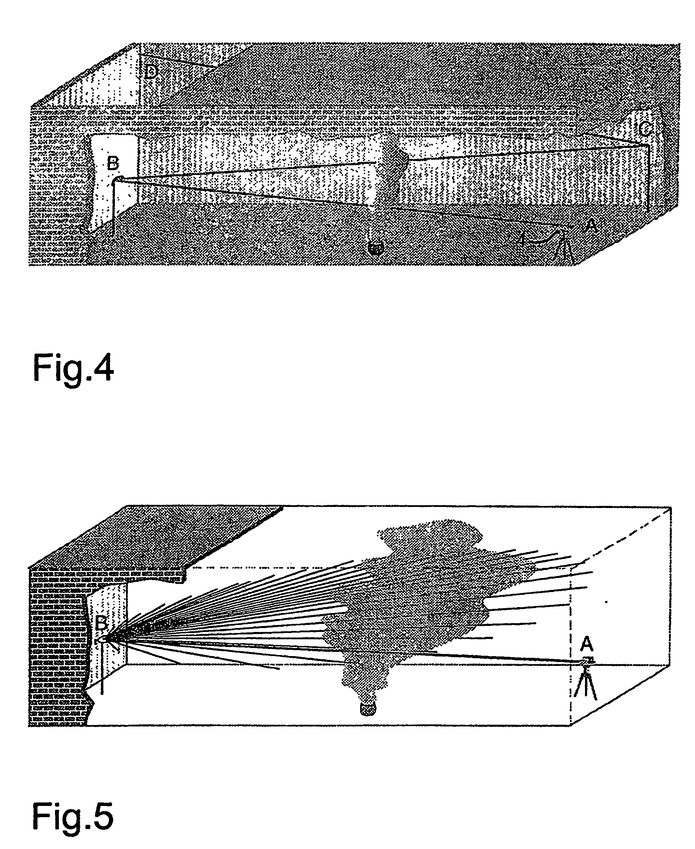

Den Aufbau einer Anordnung zur Durchführung des Verfahrens nach der Erfindung zeigt schematisch die Fig.4. An der Stelle A ist staubgeschützt ein Laserentfernungsmesser 4 aufgebaut. Der Strahlengang geht vom Punkt A zu einem Umlenkspiegel an der Stelle B und danach zu einer Lichtfalle C. An der Stelle C der Lichtfalle kann auch ein weiterer Umlenkspiegel installiert werden, der eine Weiterführung des Strahls bis an die Decke D des Raumes ermöglicht.

Um die Ausbreitung der Rauchwolke räumlich besser als mit den in Fig.4 gezeigten zwei bis drei Strahlen zu erfassen, kann, wie Fig.5 zeigt, der geschlossene Raum über einen Scan-Spiegel am Ort B räumlich abgetastet werden.

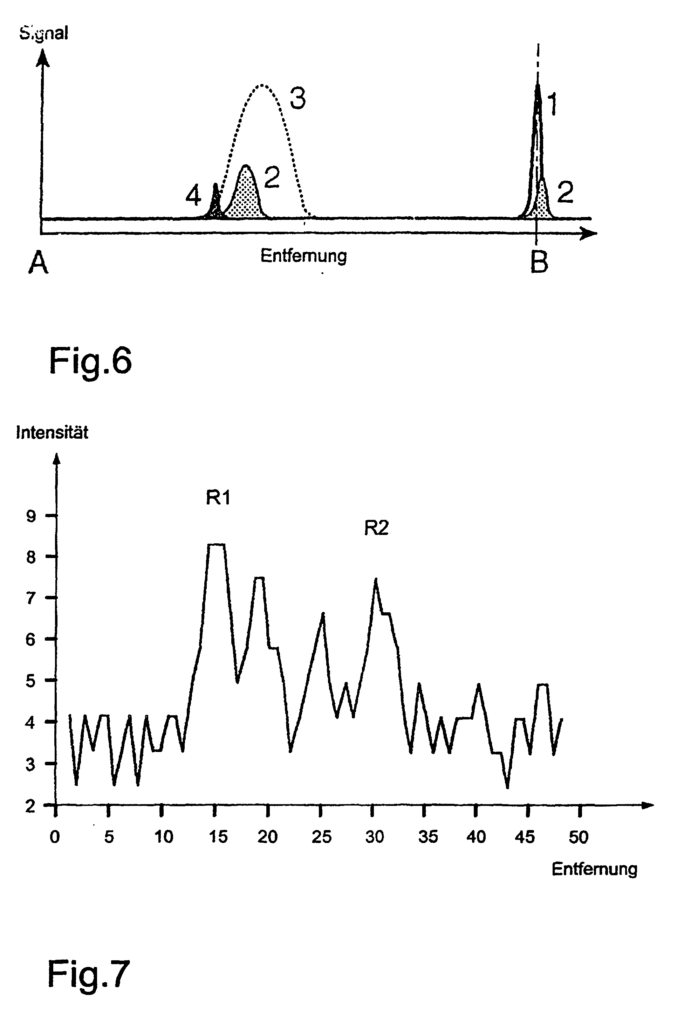

Bei Anwendung des Verfahrens in einem Tunnel kann das Lidar-System an der Decke befestigt werden und es kann durch Abtast- oder Schwenkvorrichtungen in verschiedenen Richtungen gemessen werden. Die Signale der Lidarmessung in einem Tunnel sind schematisiert in der Fig.6 zu sehen. Bei normaler, rauchfreier Messung erscheint das Signal eines am Ort B angebrachten Retroreflektors als Signal der Stärke 1. Ist Rauch zwischen dem am Ort A der Tunneldecke angeordneten Lidar-System und dem Ort B, so können folgende Fälle schematisiert werden:

Geringer Rauch zwischen den Orten A und B: Signal vom Rauch und geschwächtes Signal des Retroreflektors am Ort B (Kurve 2 in Fig.6).

Starker Rauch zwischen den Orten A und B: Signal vom Rauch (Kurve 3 in Fig.6) und kein Signal vom Retroreflektor.

Starker Rauch, der das Laserlicht auch stark absorbiert (schwarzer Rauch, Ruß): Geringes Signal vom Rauch (Kurve 4 in Fig.6) und kein Signal vom Retroreflektor. In jedem Fall kann der Rauch als solcher detektiert werden und eine Warnung ausgegeben werden.

Beim Verfahren nach der Erfindung erfolgt eine automatische Auswertung. Die Signale werden analog zur Abbildung aufgezeichnet. Sie müssen zusätzlich für nahe Entfernung mit der Überlappfunktion $\xi(R)$ und der Entfernungskorrektur versehen werden, um die folgende Lidar-Signatur zu erhalten:

$$S(R) = \frac{I(R)R^2}{K \cdot \xi(R)} = \beta(R) \cdot T^2(R) \text{ mit } K = I_0\ \tau\ \eta\ A.$$

Es wird außerdem bei Benutzung von Spiegeln zur Strahlumlenkung notwendig, die Reflexe der Spiegel zu

# EP 0 978 718 B1

korrigieren. Dann erhält man eine Lidar-Signatur, die vom natürlichen Aerosolgehalt des geschlossenen Raumes, der Halle oder des Tunnelabschnitts bestimmt ist. Bei Auftreten von Rauch im Strahlengang zeigt die Lidar-Signatur eine oder mehrere Inhomogenitäten.

In Fig.7 ist eine diesbezügliche Lidar-Signatur, d.h. der Intensitätsverlauf des rückgestreuten Signals in Abhängigkeit von der Zeit oder Entfernung, dargestellt, wobei zwei Rauchereignisse R1 und R2 im Verlauf der z.B. einen Zickzackweg aufweisenden Meßstrecke stattfinden. Diese Inhomogenitäten lassen sich von dem normalen atmosphärischen Aerosol des Raumes trennen und es kann eine Warnung ausgelöst werden.

Bei kleinen Räumen ist zusätzlich eine Entfaltung des Signals zur besseren Entfernungsauflösung zweckmäßig.

Für die Erfassung von Rauch in einem Tunnel kann es vorkommen, daß die starke Rauchentwicklung das ausgesendete Lidar-Signal verschluckt, so daß es nach der Auswertung nur durch einen kurzen Anstieg sichtbar wird. Zur Abklärung, ob der Rauch sehr dicht ist, kann die Transmission als Meßwert herangezogen werden. Der Laserstrahl wird auf einen Retroreflektor fokussiert, und das Signal verschwindet von diesem Reflektor, wenn der Rauch zu dicht wird. Ist dies der Fall, so kann die kleine Inhomogenität in der ausgewerteten Lidar-Signatur zur Identifizierung des Ortes der Rauchentwicklung herangezogen werden.

## Patentansprüche

1. Verfahren zum Erfassen von Rauch mittels eines Lidar-Systems, bei dem die von einer Laser-Strahlungsquelle emittierten und von Partikeln und Molekülen der Atmosphäre rückgestreuten Laserimpulse bezüglich ihrer Intensität in Abhängigkeit von der Zeit, die seit der Emission des Laserimpulses vergangen ist, in einem Empfangsteleskop-Sensor registriert und detektiert werden, wobei eine überwachende Lidarmessung innerhalb eines geschlossenen Raumes, beispielsweise in einer Halle oder in einem Tunnel, mittels einer den Raum insgesamt im wesentlichen durchziehenden und somit beispielsweise auch gefaltet verlaufenden Meßstrecke durchgeführt wird, und aus den im Empfangsteleskop-Sensor registrierten und aufgezeichneten Signalen gemäß der folgenden Gleichung eine vom natürlichen Aerosolgehalt des jeweiligen Raumes bestimmte Lidar-Signatur

$$S(R) = \frac{I(R)R^2}{K} = \beta(R) \cdot T^2(R) \text{ mit } K = I_0 \; \tau \; \eta \; A$$

(hierin sind: $I(R)$ = Empfangene Intensität aus der Entfernung R, R = Entfernung vom Lidar-System zum streuenden Partikel (Meßentfernung), $\beta(R)$ = Atmosphärischer Rückstreukoeffizient in der Entfernung R, $T(R)$ = Atmosphärische Transmission vom Lidar-System bis zur Entfernung R, $I_0$ = Intensität des emittierten Rechteck-Laserimpulses, $\tau$ = Impulslänge, $\eta$ = Wirkungsgrad des Sende- und Empfangssystems, und A = Effektive Fläche der Empfangsoptik) erhalten wird, die bei Auftreten von Rauch im Strahlengang eine oder mehrere Inhomogenitäten zeigt, **dadurch gekennzeichnet, daß** zur Kontrolle mittels eines im Raum angeordneten Retroreflektors, auf den der Laserstrahl fokussiert ist und der eine zu überwachende Meßstrecke terminiert, durch eine Transmissionsmessung festgestellt wird, ob die Dämpfung der Laserstrahlung sehr stark ist, so daß auf eine extrem starke Rauchentwicklung im Verlauf der Meßstrecke geschlossen werden kann.

2. Verfahren nach Anspruch 1, **dadurch gekennzeichnet, daß** im Falle, daß nur eine kleine Inhomogenität in der Lidar-Signatur vorliegt, weil die emittierte Laserstrahlung durch die starke Rauchentwicklung verschluckt wird, diese kleine Inhomogenität in der Lidar-Signatur zur Identifizierung des Ortes der Rauchentwicklung herangezogen wird.

3. Verfahren nach Anspruch 1, **dadurch gekennzeichnet, daß** im zu überwachenden Raum zur Umlenkung des Laserstrahls des Lidarsystems im Verlaufe der Meßstrecke ein oder mehrere schwenkbare Spiegel verwendet werden, so daß sich eine dreidimensionale Raumabtastung ergibt.

4. Verfahren nach Anspruch 3, **dadurch gekennzeichnet, daß** die Reflexe der im Raum verwendeten Spiegel korrigiert werden.

## Claims

1. A method of smoke detection by means of a LIDAR system in which the laser pulses emitted by a laser beam

7

source and back-scattered by the particles and molecules in the atmosphere are registered and detected in a receiver telescope sensor as regards their intensity as a function of the time having passed since emission of the laser pulse, a monitoring LIDAR measurement being made within an enclosure, for example in the bay of a building or in a tunnel, by means of a measuring range covering substantially the entire enclosure and thus also in a folded configuration, for example, to obtain from the signals registered and recorded by the receiver telescope sensor a LIDAR signature dictated by the natural aerosol content of the enclosure in each case in accordance with the following equation

$$S(R) = \frac{I(R)R^2}{K} = \beta(R) \cdot T^2(R) \text{ with } K = I_0 \, \tau \, \eta \, A$$

(where I(R) = intensity detected from the range R, R = range of LIDAR system to scattering particles (measuring range), .$\square$(R) = atmospheric back-scattered coefficient at range R, T(R) = atmospheric transmission from the LIDAR system to the range R, $I_0$ = intensity of emitted square wave laser pulse, $\square$ = pulse length, .$\square$ = efficiency of the emitter/detector system, and A = effective surface area of detector optics), showing one or more inhomogenities due to the beam being clouded by smoke, **characterized in that** for checking by means of a retroreflector arranged in the enclosure on which the laser beam is focussed and which terminates the measuring range to be monitored it is established by a transmission measurement whether the clouding of the laser beam is very strong as an indication of an extremely heavy smoke development within the measuring range.

2. The method as set forth in claim 1, **characterized in that** in case only a small inhomogenity in the LIDAR signature results due to the emitted laser beam being buried in heavy smoke development, this small inhomogenity in the LIDAR signature is used to identify the location of smoke development.

3. The method as set forth in claim 1, **characterized in that** for diverting the laser beam of the LIDAR system within the measuring range one or more pivotable mirrors are used in the enclosure to be monitored so as to achieve three-dimensional scanning of the enclosure.

4. The method as set forth in claim 3, **characterized in that** the reflections of the mirrors used in the enclosure are corrected.

**Revendications**

1. Procédé permettant de détecter les fumées au moyen d'un système lidar, dans lequel les impulsions laser émises par une source de rayonnement laser et rétrodiffusées par les particules et les molécules de l'atmosphère sont enregistrées et détectées dans un capteur à télescope récepteur par rapport à leur intensité en fonction du temps qui s'est écoulé depuis l'émission de l'impulsion laser, une mesure lidar de contrôle étant effectuée à l'intérieur d'une pièce fermée, notamment dans un hall ou un tunnel, au moyen d'une section de mesure qui traverse principalement la pièce et qui évolue donc avec des courbes et une signature lidar déterminée par la teneur d'aérosol naturelle de la pièce correspondante étant obtenue à partir des signaux enregistrés dans le capteur à télescope récepteur conformément à l'équation suivante :

$$S(R) = I(R)R^2 / K = \beta(R) \, T^2(R) \text{ avec } K = I_0 \, \tau \, \eta \, A$$

(dont : I(R) = intensité reçue à partir de l'intervalle R, R = intervalle du système lidar par rapport aux particules de dispersion (intervalle de mesure), $\beta(R)$ = coefficient de rétrodiffusion atmosphérique dans l'intervalle R, T(R) = transmission atmosphérique du système lidar par rapport à l'intervalle R, $I_0$ = intensité de l'impulsion laser rectangulaire émise, $\tau$ = longueur d'impulsion, $\eta$ = rendement du système émetteur et récepteur et A = surface effective du collecteur de lumière), révélant une ou plusieurs non-unifomités en cas d'apparition de fumées dans le trajet des rayons. Ce procédé est **caractérisé par le fait qu'**une mesure de la transmission permet de déterminer si l'affaiblissement du rayonnement laser est fort au point de ne pas pouvoir absorber un dégagement de fumées extrêmement important le long de la section de mesure en vue d'un contrôle au moyen d'un rétroréflecteur disposé dans la pièce, sur lequel est focalisé le rayon laser et qui fixe le moment pour une section de mesure à contrôler.

2. Procédé conformément à la revendication 1, **caractérisé par le fait que** si une non-uniformité insignifiante est constatée dans la signature lidar en raison de l'absorption du rayonnement laser émis par le fort dégagement de fumées, cette non-uniformité insignifiante sera introduite dans la signature lidar afin d'identifier le lieu du dégagement des fumées.

3. Procédé conformément à la revendication 1, **caractérisé par le fait qu'**un ou plusieurs réflecteurs pivotants sont utilisés dans la pièce qui doit être contrôlée afin de dévier le rayon laser du système lidar le long de la section de mesure de sorte qu'il en résulte une exploration tridimensionnelle de la pièce.

4. Procédé conformément à la revendication 3, **caractérisé par le fait que** les reflets des réflecteurs utilisés dans la pièce sont corrigés.

Inhomogenes Aerosol

Fig.1

Fig.2

Fig.3

Fig.4

Fig.5

Signal

4    2    3    1

2

A          Entfernung          B

# Fig.6

Intensität

R1

R2

Entfernung

# Fig.7